# EUROPEAN PATENT APPLICATION

(11) **EP 0 704 164 A2**
(43) Date of publication of application: **03.04.1996**
(21) Application number: 95306322.9
(22) Date of filing: 08.09.1995
(51) Int. Cl.: A23G 1/00, A23G 3/00

(54) **Lactic bacteria containing composition**

(30) Priority: 08.09.1994 JP 215119/94; 23.02.1995 JP 35481/95
(71) Applicant: FUJI OIL CO., LTD., Osaka 542 (JP); TON CO., LTD, Kobe-shi, Hyogo 654 (JP)
(72) Inventor: Baba, Hideki, Sennan-gun, Osaka 590-04 (JP); Kubota, Hayato, Izumi-shi, Osaka 594 (JP); Horishita, Sumio, Kobe-shi, Hyogo 651 - 24 (JP); Matsunobu, Akira, Nishinomiya-shi, Hyogo 669-11 (JP)
(74) Representative: Wakerley, Helen Rachael

(57) **Abstract**

The present invention relates to a composition in which lactic bacteria can be preserved in a living state for a long period. This composition can be obtained by mixing fats and/or oils, fermented milk powder and saccharides, heating at 30°C to 50°C to melt the mixture and adding live lactic bacteria.

## Description

The present invention relates to a composition of the chocolate type, a method of manufacturing it and its use to make confectionery. In detail, it relates to a composition containing live lactic bacteria, such as bifidus bacteria.

Chocolate made from fats and/or oils, such as cacao butter, as raw material is popular for its unique flavor and is applied to a variety of confectionery, which has appeared widely in the market. As such chocolate confectionery, there is oil-covered confectionery in which a center material of dry fruit such as raisin or nuts, such as almond, is covered with chocolate, besides slab chocolate made from chocolate only. Such chocolate confectionery is regarded as a luxury and also is often eaten by growing children as a between-meals refreshment or as a nutritional snack in physical exhaustion due to its high calories and excellent nutritive composition.

In the meantime, in line with the recent health-oriented boom, there is an increasing concern about a function of adjusting the human body as a function of food (just referred to as 'body adjustment function' hereinafter), in addition to conventional nutrition and an organic function (the taste). There has been a great demand to impart the body adjustment function on chocolate confectionery popular among children and so on accordingly. However, it is a current situation that such chocolate confectionery has not appeared.

As one means for giving the body adjustment function to food, there is the application of lactic bacteria, especially bifidus bacteria. In the intestines of an animal such as a human being, colibacillus, lactic bacteria such as bifidus bacteria or the like form bacteria plexus. Among bacteria plexus, the above-mentioned bifidus bacteria is known from its immunity activating function, peristalsis activating function by acetic acid and lactic acid generated thereby and the body adjustment function such as synthesizing vitamin B group. Further, lactic bacteria except for the bifidus bacteria (just referred to 'general lactic bacteria' hereinafter) such as lactic rod-shaped bacteria and lactic coccus is known from its body adjustment function for lowering serum cholesterol value, preventing opportunistic infection, decomposing nitrosoamine, activating immunity system, generating antibacterial material, accelerating multiplication of the bifidus bacteria and the like.

In this way, lactic bacteria, such as bifidus bacteria, standard bacteria or the like, show an excellent body adjustment effect in the intestine. Thus, when the level of effective bacteria such as bifidus bacteria in the bacteria plexus inside the intestine is high, health can be maintained in a human being. However, when the level of bifidus bacteria and the like decreases due to stress, alcohol, fatigue and the like, various kinds of illness such as diarrhoea, constipation, intestine cancer or the like may be caused.

Under such a situation, focused upon the body adjustment function by lactic bacteria such as bifidus bacteria, there has been a lot of trials conducted to intend to increase lactic bacteria such as bifidus bacteria in the bacteria plexus inside the intestines with a supply of bacteria, which is added to food in a living state, from outside the body. However, lactic bacteria such as bifidus bacteria dies in contact with air because of its anaerobic property. Further, since it is weak against physical shock or water, there is another problem that it dies in the step of stirring or mixing in the food manufacturing process, or it dies under preservation due to moisture in food. Especially, this tendency becomes outstanding in bifidus bacteria rather than general lactic bacteria. For this reason, although a lot of food in which bifidus bacteria and the like are added prevails, it is a fact that they are compounded into such food not in a living state, but in a dead state.

The present invention aims to provide a highly luxurious and nutritional composition in which lactic bacteria, such as bifidus bacteria, are compounded in a living state, a method of manufacturing it and its use to make confectionery.

The first aspect of the invention is a composition containing fats and/or oils, fermented milk powder, saccharides, and lactic bacteria compounded in a living state. The second aspect is a method of manufacturing such a composition comprising the steps: mixing fats and /or oils, fermented milk powder and saccharides; heating the mixture to 30°C to 50°C to melt it; and adding live lactic bacteria.

Further, a third aspect of the invention is a confectionery in which a center material is covered with a composition according to the first aspect of the invention. Confectionery is also provided in which the center material is formed by a composition according to the first aspect of the invention and it is covered by chocolate or chocolate-like material.

The inventors of the present invention accumulated a series of research centering on the technology of compounding lactic bacteria such as bifidus bacteria and general lactic bacteria in a living state into oil compositions having superior luxuries and nutrition. As a result, they discovered that lactic bacteria such as bifidus bacteria can be compounded in a living state into the oil composition by melting a mixture of raw materials such as fats and/ or oils, saccharides, and the like within the specific scope as mentioned above and adding lactic bacteria such as bifidus bacteria in a living state so as to compound the bacteria into the oil composition on manufacture. Further, in the thus obtained oil composition, the lactic bacteria, such as bifidus bacteria, is embedded into the oil composition and covered thereby so as to prevent contact with outside air and water. As a result, the damaging effects on lactic bacteria caused by air, water and the like are prevented and lactic bacteria, especially bifidus bacteria, which are extremely difficult to maintain in a living state in the oil composition, can survive for a long period without a decrease in the initial number of bacteria. If the oil composition containing the bifidus bacteria and the like in a living state is eaten, the bifidus bacteria and the like can reach the intestine and enter into bacteria plexus inside the intestine so as to produce an excellent effect for adjusting the intestine.

Furthermore, if covered confectionery is manufactured using this composition containing lactic bacteria as center material or with other confectionery as center material, confectionery having new function and flavor can be created.

The present invention is now described in further detail.

The composition of the present invention, which may be in the form of chocolate, can be manufactured by mixing fats and/or oils, fermented milk powder and saccharides, heating and melting thereof within the specific range of temperatures and adding lactic bacteria in a living state.

As the fats and/ or oils, there is , for example cocoa butter. This cocoa butter is not especially limited and includes such conventional types as have been employed heretofore.

Besides, cocoa butter substitute may be employed alone or together with the cocoa butter. As this cocoa butter substitute (just referred to 'substitute oil' hereinafter), both tempering type and non-tempering type may be employed; however, it is preferable to employ tempering type, which can be compounded at random with cocoa butter (there is no limitation on its amount for compounding therein and the like). As the tempering type of the substitute oil, there are, for example, palm oil, shea fat, sal fat, illipe fat, kokum fat, mango kernel oil and the like, which are natural oils containing relatively high amounts of 2-unsaturated-1,3-disaturated triglyceride (SUS) or ester-interchanged oil thereof. Further, the tempering type includes mixturesof one kind of oil or more obtained by fractioning oil ester-interchanged by employing lipase having 1,3-phase specificity, if necessary, in ester-interchanging oil by enzyme. Among these, it is preferable to employ palm oil, which is fractionated at a middle melting point or ester-interchanged oil by enzyme method from a viewpoint of steady supply. As the non-tempering type substitute oil, there are, for example, lauric oil, trans acid form (hard butter) and the like. When employing substitute oil of the trans acid form, the advantage of reduced possibility to cause soapy smell in hydrolyzing can be obtained. Furthermore, it is preferable to mix at least one of cocoa butter or tempering type substitute oil with fats and/ or oils whose melting point is not more than 25 °C . Namely, such mixed oil shows excellent effect in that it does not become hard under refrigeration or freezing (Japanese Patent Official Gazette No. 62-50090 and No. 1-19858). When employing fractionated soft oil of laurin based oil, the effect to prevent hardening under refrigeration and the like can be further promoted.

Next, the mixing ratio of the cocoa butter and the substitute oil is as follows. That is, regardless of the cocoa butter or the substitute oil, the mixing ratio of oil is within the range 25 to 50 weight % (just abbreviated to % hereinafter), preferably 35 to 45% based on the total composition.

In addition, as mentioned before, when cocoa butter and tempering form oil are employed together, both of them may be mixed at random. However, when cocoa butter and non-tempering form oil are mixed together, it is difficult to mix thereof at random because of the property of such mixed oil. Namely, cocoa butter must be extremely increased or to the contrary must be extremely decreased. Specifically, the mixing ratio of cocoa butter into non-tempering substitute oil is not more than 25%, while the mixing ratio of non-tempering substitute oil into cocoa butter is not more than 5%.

Next, with the intention to impart sourness to the oil composition, fermented milk powder is employed together with the above fats and/ or oils. That is, since the composition of the present invention contains lactic bacteria in a living state, the fermented milk powder is mixed in so as to be tasted as such confectionery in accord with the fact that lactic bacteria is compounded. Besides, since the fermented milk powder is mixed therein so that the pH of the composition becomes sour, the effect to adjust the environment for growing lactic bacteria can be obtained. The fermented milk powder can be prepared by employing lactic acid such as Lactobatcillus blugaricus, which is common in food industry, so as to ferment milk and the like and adjust thereof, and then pulverize (powder) by a spray dry method or the like. In addition, no living lactic bacteria usually exist in this fermented milk powder. The mixing ratio of such fermented milk powder is within the range 5 to 35% based on the total composition, preferably 10 to 30%. Thanks to this fermented milk powder, a composition having a fresh sour taste can be obtained.

Moreover, milk based food such as whole milk powder or skim milk powder is usually employed for chocolate as oil confectionery and may be employed for the composition of the present invention. Namely, it may be mixed within the range 5 to 20% based on the total composition, preferably 5 to 15%.

Then, as saccharides as one ingredient of the composition, which are not critical, there are sugars, generally employed, lactose, starch syrup, powder candy, isomerised sugar and the like. In addition, the mixing ratio thereof is not limited, either, and may be decided in accordance with the usage appropriately. However, the mixing ratio of saccharides in general for chocolate is set within the range 20 to 60% based on the composition, preferably 40 to 50%.

It is preferable to employ oligosaccharide as a part of the saccharides. This oligosaccharide is composed of 3 to 10 monosaccharides such as glucose, fructose and the like to be connected. In accordance with the type(s) or the number of monosaccharides as constituents thereof, effects such as prevention of tooth decay, promotion of increasing effective bacteria inside the intestine like bifidus bacteria as well as a function of a sweeting agent can be given. As such oligosaccharide, first as oligosaccharide having an effect of preventing tooth decay, there are, for example, galacto-oligosaccharide and fructo-oligosaccharide. Secondly, as oligosaccharide having a promoting effect of increasing bifidus bacteria and the like, there are, for example, fructo-oligosaccharide and isomalto-oligosaccharide. Among them, it is preferable to employ fructo-oligosaccharide or isomalto-oligosaccharide, which has an effect of increasing bifidus bacteria. In other words, the composition of the present invention is intended to impart an intestine adjustment function. Therefore, if the composition of the present invention, which may be manufactured by substituting a part of general saccharides with the above fructo-oligosaccharide or isomalto-oligosaccharide, is eaten, multiplication of bifidus bacteria and the like in the intestine both as an additive in the composition of this invention and also as inhabiting' bifidus bacteria inherent in a human being.

The mixing ratio of the oligosaccharide is not critical, however, it is preferable to set within the range 1 to 2 % based on the total composition. When less than 1 %, there is a possibility of no appearance of the effect by adding oligosaccharide, whilst when over 2 %, there is no special improvement by this addition, resulting in wastefulness in view of cost. Besides, the above oligosaccharide may be employed solely respectively or in combination of two or more.

Still furthermore, other additives and the like generally employed for chocolate-like food may be compounded into the composition of the present invention besides the above fats and/ or oils or saccharides.

As one of such additives, there is emulsifier. As emulsifier, there are, for example, soybean-origin or egg yolk-origin lecithin and sucrose fatty acid ester. Further, various kinds of food coloring material, flavoring, a sour agent, sarcocarp and the like may be employed. For example, as flavor, there are yoghurt flavor, orange flavor, strawberry flavor, lemon flavor, coffee flavor and the like. Furthermore, as sarcocarp, there is, for example, strawberry and the like.

Next, lactic bacteria, as the major and characteristic ingredient of the composition of the present invention are described.

The lactic bacteria employed in the present invention are not especially restricted, for example, there are lactic bacteria generally employed in food industries. Further, lactic bacteria as defined in the present invention are those which acquire energy by fermenting saccharides so as to produce a lot of lactic acid (page 958, right below column of new edition Food Industries Cyclopedia, edited by Japan Food Industry Academia). Furthermore, the lactic bacteria include bifidus bacteria, as mentioned before. This is because bifidus bacteria also acquire energy by fermenting saccharides so as to generate lactic acid. Still furthermore, the lactic bacteria are separated into two kinds bifidus bacteria and the other general lactic bacteria, as mentioned before. Hereinafter, such bifidus bacteria and general lactic bacteria are shown respectively.
(1) General lactic bacteria
   [Lactobatcillus genus]
   Lactobatcillus casei
   Lactobatcillus bulgaricus
   Lactobatcillus plantaram
   Lactobatcillus faecalis
   Lactobatcillus acidophilus
   Lactobatcillus sporogenes
   [Leuconostoc genus]
   Leuconostoc dextranicum
   Leuconostoc citrovorum
   [Streptococcus genus]
   Streptococcus thermophilus
   Streptococcus lactis
   Streptococcus cremoris
(2) Bifidus bacteria
   [Bifidobacterium genus]
   Bifidobacterium adolescentis
   Bifidobacterium longum
   Bifidobacterium bifidum

Among the above- mentioned general lactic bacteria, it is preferable to employ ascospore lactic bacteria from a viewpoint of acidproof, heat resistance, multiplication and fixing properties in the intestine, especially preferable to employ Lactobatcillus sporogenes.

In the meantime, among above-mentioned bifidus bacteria, it is preferable to employ Bifidobacterium longum from a viewpoint of multiplication and fixing properties in the intestine, production of lactic acid and acetic acid in the intestine.

The total mixing ratio of lactic bacteria such as above-mentioned general lactic bacteria, bifidus bacteria and the like is within the range 0.01 to 1.0 % based on the total composition, preferably 0.05 to 0.5 %, most preferably 0.11 to 0.15 %. When less than 0.01 %, there is a possibility of losing the effect of an intestine adjustment function and the like, whilst when over 1%, there is a possibilty of no further effect in accordance with its additional amount.

Thus, from the viewpoint of easy manipulation in mixing lactic bacteria, the mixing ratio of lactic bacteria is preferably set by dry weight of bacteria, however, it can be set by the number of bacteria as follows. Namely, it is set within 5 x 10⁶ to 5 x 10⁸ per 1 g of the composition, preferably 2 x 10⁷ to 2 x 10⁸, most preferably 5 x 10⁷ to 7 x 10⁷. In addition, this number of bacteria can be converted with above-mentioned dry weight reciprocally. This is because that 5 x 10⁶ to 5 x 10⁹ bacteria usually exists per 1 g of dry weight of bacteria.

Furthermore, the mixing ratio of above-mentioned bifidus bacteria and the like can be set by the number of living bacteria in case the composition has to be preserved for a long period. For example, the bacteria can be mixed at a specific ratio so that the number of living bacteria in six months after being produced (room temperature preservation) falls within 3 x 10⁶ to 3 x 10⁸ per 1 g of the composition, preferably 1 x 10⁷ to 1 x 10⁸ , most preferably 4 x 10⁷ to 5 x 10⁸.

Still furthermore, the mixing ratio of general lactic bacteria and bifidus bacteria is not strictly limited; however, an equal mixing ratio is preferable irrespective of the weight ratio or the bacteria number ratio. However, aiming to strengthen the intestine adjustment function of the composition, bifidus bacteria alone can be employed.

Since living lactic bacteria mixed therein is one characteristic of the present invention, whether a certain composition is related to the present invention or not can be judged by the number of living bacteria immediately after being manufactured or in 6 months after being manufactured. As such judgement by the number of living bacteria, for example, a colony counting method usually conducted can be applicable.

The manufacturing method of the composition of the present invention is roughly separated into two processes: ① mixing fats and/or oils, saccharides and the like and adjusting the mixture, and ② adding lactic bacteria into the above-mentioned mixture.

First, the process of mixing each raw material in the process ① is conducted based upon a usual manufacturing method for chocolate. Namely, the process comprises the steps of mixing fermented milk powder and saccharides (which may contain oligosaccharide, if necessary), adding fats and/ or oils such as heated and melted cocoa butter, and further adding emulsifier such as lecithin so as to be rolled. Thereafter, conching is conducted. When it is necessary to add flavor and the like, the desired mixture can be compounded by adding the above- mentioned flavour and the like just immediately before completion of conching. Then, this mixture is preferably subjected to tempering treatment. This is because this tempering treatment can restrain the occurrence of blooming and the like in the composition.

Second, the process ② of adding lactic bacteria into the above-mentioned mixture is conducted as follows. That is, the mixture compounded in process ① is heated to a temperature in the range 30° to 50° C, preferably 30° to 42° C, to melt it. Then, lactic bacteria is mixed in at a specific ratio based on this heated and melted mixture as mentioned above. In the present invention, the process of adding lactic bacteria is required to be conducted within the above temperature range. At less than 30°C , the viscosity of the mixture does not lower sufficiently, resulting in deterioration of workability, also there is a tendency that the treatment for covering center material, mentioned later, becomes difficult. On the other hand, at over 50 °C, it is feared that lactic bacteria may die due to heat and, as a result, the desired effect of the intestine adjustment function of the present invention cannot be obtained. In addition, the lactic bacteria in dry state is preferably employed for the above mixing process from a viewpoint of workability and the like.

The shape of the processed composition of the present invention is not specifically restricted and is decided appropriately by each user. Examples are a plate shape (slab chocolate), a spherical shape, a rugby-ball shape, a polygonal prism shape such as a trigonal prism or a prism, a cylindrical shape and the like.

Then, the covered confectionery employing the composition of the present invention is described as follows.

As the mode of covering confectionery of the present invention, there are two modes of (A) and (B) shown below.
(A) Covered confectionery in which the composition according to this invention covers a center material.
(B) Covered confectionery in which other chocolate-like composition covers the composition of the present invention which forms the center material.

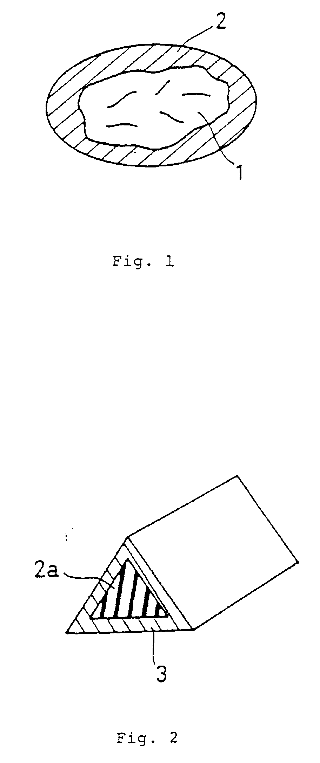

First of all, the first mode (A) is described. As shown in Fig. 1, center material 1 is covered by the composition 2 of the present invention in this covered confectionery (A).

As the above center material, which is not especially limited, there are center material employed heretofore for chocolate-covered confectionery. As such center material, there are dried fruits such as pineapple, papaya, mango, apricot, apple and the like in addition to raisin and prune. Further, there are nuts such as peanut, cashew nut, almond, pistachio, walnut, hazelnut, macadamia nut and the like. Further, there are puff, sesame and the like of barley, wheat, oats, rye, corn, rice, foxtail millet, barnyard millet and the like, or soybean, broad bean, pea, adzuki bean, or pine nut. Among these, it is preferable to employ raisin, prune or the like as dried fruit, almond, cashew nut or the like as a nut, corn puff as cereals' puff or beans because these center materials harmonize with a composition such as chocolate in view of flavour.

As mentioned above, the center material can be appropriately selected in accordance with the type of the covered confectionery (A). However, it is required to pay attention to moisture content thereof. For example, it is preferable that the moisture content is within the range 8 to 25%, most preferably 12 to 12.5% in the case of raisins. When the moisture content is extremely small, less than 8%, there is the possibility that the raisin is too hard to eat. On the other hand, when the moisture content is extremely high, over 25%, the following defects may occur: the moisture starts to leak out through grape-origin wax coated on the surface of the raisin. As a result, the is the fear that mold may occur on the surface thereof and that cracks may occur in the covering material. In addition, since the live lactic bacteria compounded in the covering composition, especially bifidus bacteria, is weak against moisture as mentioned above, such bacteria may die due to the moisture leaked out from the raisin.

The covered confectionery (A) can be manufactured as follows. The center material is covered with the above composition of the present invention. This covering process is not especially limited. Conventional methods employing a revolving pan can be applied.

Thus, the covered confectionery (A) as shown in Fig. 1, in which lactic bacteria is compounded in a living state, can be manufactured. In the figure, 1 is center material and 2 is a composition according to the invention.

Next, the other mode of making covered confectionery (B) is described.

Fig. 2 illustrates an example of the covered confectionery (B) of the present invention. In the figure, 2a is center material comprising a composition of the present invention and 3 is a chocolate-like composition material covering this center material 2a.

The center material 2a may be composed solely of the composition of the present invention. Also, for example, dry fruit such as raisins may be mixed additionally with the composition. Further, as the chocolate-like covering composition, conventional chocolate and the like may be applied. Or, a composition according to the invention may be used as a covering material.

The shape of the covered confectionery (B) is not strictly limited. In addition to the trigonal prism type shown in Fig. 2, there are spherical shapes, polygonal prism shapes such as a prism, rugby-ball shapes and the like.

The covered confectionery (B) can be manufactured, for example, as follows. The composition of the present invention is made by the above-mentioned process whilst chocolate is prepared by a usual method. How to cover the composition is not specifically limited, any conventional method can be applied. As an example, there is a method employing the so-called shell mold plant. That is, chocolate immediately after being tempered is injected into a mold and cooled. Then, when a neighbouring portion of chocolate contacting the mold solidifies, the mold is turned round so that a center portion of unsolidified chocolate is flowed away, resulting in a chocolate-made concave mold. Next, the composition containing lactic bacteria as center material is packed into the space of this chocolate-made concave mold at 80 to 90 % rate thereof so as to be cooled and solidified. Then, chocolate is filled further over the above packed composition, chocolate overflowed therefrom is scraped, and the chocolate-covered composition is cooled so as to be solidified. Finally, the covered confectionery (B) in which chocolate covers the composition containing lactic bacteria can be obtained by withdrawing the chocolate-covered composition from the mold. In addition, this method is not only applied to a method by employing the composition of the invention as center material, but also to a method by employing solid material such as raisin or nuts as center material.

As mentioned above, the method of manufacturing the composition of the present invention comprises steps of melting a mixture of fats and/or oils, saccharides and the like at a temperature within the specified range and adding bifidus bacteria and the like in a living state. According to this method, the composition in which lactic bacteria such as bifidus bacteria and the like is compounded in a living state can be manufactured. Further, in the composition of the present invention, lactic bacteria such as bifidus bacteria are embedded therein and covered therewith so that the bacteria may not be contacted with air or water. As a result, in the composition of the invention, detrimental effects on lactic bacteria caused by air or water can be prevented so that lactic bacteria, especially bifidus bacteria difficult to retain in a living state, can be preserved for a long period without decreasing the initial number of bacteria. Therefore, if you eat the composition of the present invention in which this living bifidus bacteria is compounded, bifidus bacteria and the like reach your intestines and enter into bacteria plexus, resulting in an excellent intestine adjustment function. Then, occurrence of disease such as diarrhoea, constipation, intestine cancer can be restrained. Furthermore, each of the two types of covered confectionery of the present invention using such compositions containing lactic bacteria have the above body adjustment functions, excellent luxuries and nutrition. For this reason, if you eat this coated confectionery, you can be filled with nutrition with enjoying their flavour. In this sense, they are ideal foods which can promote your health.

### BRIEF DESCRIPTION OF THE DRAWINGS

Fig. 1 illustrates an example of covered confectionery of the present invention and
Fig. 2 illustrate another example of covered confectionery of the present invention.

### EXAMPLES 1 TO 6

Compositions according to the invention were compounded by employing raw material at the mixing ratio shown in table 1 below by the above-mentioned method and heated to a temperature respectively shown in table 1 for melting. The mixture of bifidus bacteria (Bifidobacterium longum, the same applied to hereinafter) and general lactic bacteria (Lactobatcillus sporogenes, the same applied to hereinafter) is added therein. Each amount of the bifidus bacteria and the like to be added is also shown in table 1. Then, 40 pieces of raisin (0.4 g per 1 piece) were charged into a revolving pan. Further, the composition wherein the above-mentioned bifidus bacteria and the like is compounded was scattered thereon and cooled alternately. In this way, the covered confectionery (A) as shown in Fig. 1 was produced.

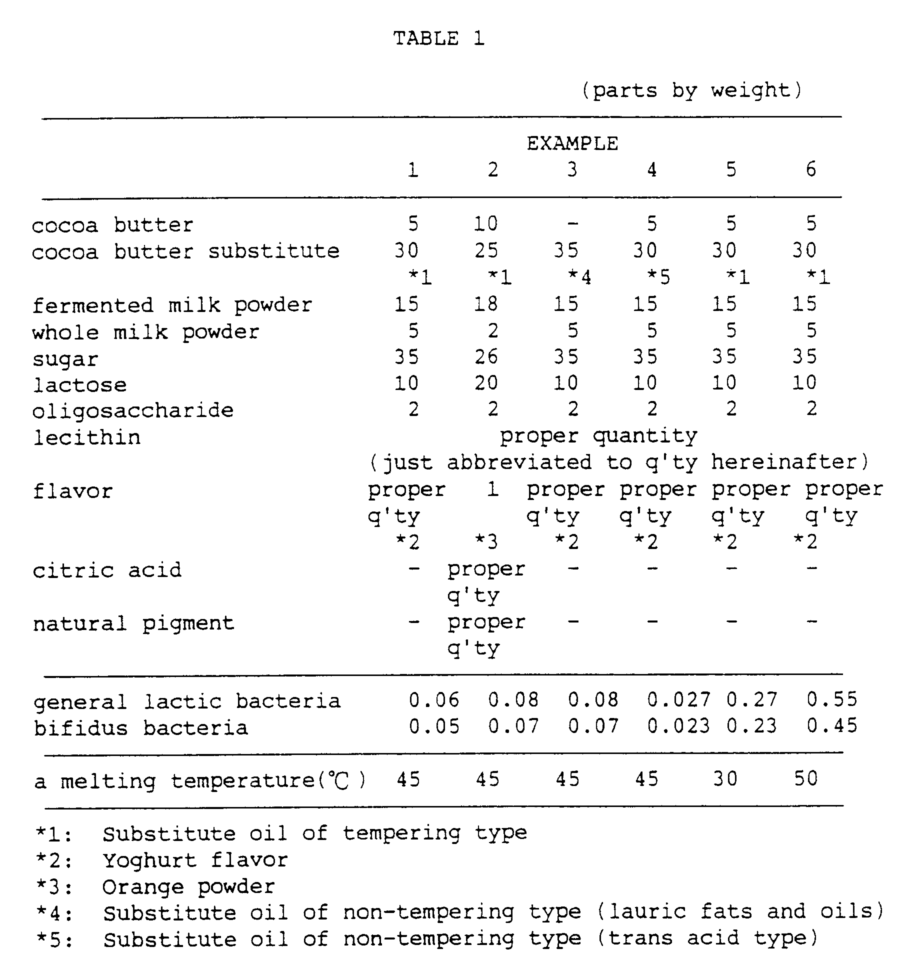

Thus obtained covered confectionery (A) was subjected to an organoleptic test. As a result, example 1 tasted of plain yoghurt and example 2 tasted of orange, both which were tasty. Further, example 3 was the covered confectionery made of non-tempering lauric fats and oils, while example 4 was the covered confectionery made of non-tempering trans acid type fats and oils, both which could be made without problems in manufacturing process or products. Furthermore, both examples 3 and 4 were tasty. Still furthermore, each composition was melted at 30 °C (a lower limit) and 50 °C (an upper limit) in examples 5 and 6 respectively and bifidus bacteria and the like was added therein so as to produce covered confectionery. These examples 5 and 6 could be manufactured without problem and thus obtained covered confectionery was tasty.

Next, covered confectionery of examples 1 to 5 were subjected to a survival test immediately after being manufactured and six months later in preservation at a room temperature. The results are shown in table 2. In addition, the survival test was conducted in accordance with a bromin cresol purple (BCP) additive plate-count-agar medium method, which is adopted for checking survived bacteria such as general lactic bacteria.

**TABLE 2**

| | (the number of bacteria / 1 g) | | | | | |
|---|---|---|---|---|---|---|
| | EXAMPLE | | | | | |
| | 1 | 2 | 3 | 4 | 5 | 6 |
| When mixing | | | | | | |
| general lactic bacteria | 2x | 2.6x | 2.6x | 9x | 9x | 2x |
| | 10⁷ | 10⁷ | 10⁷ | 10⁶ | 10⁷ | 10⁸ |
| bifidus bacteria | 3x | 4.4x | 4.4x | 1.1x | 1.1x | 3x |
| | 10⁷ | 10⁷ | 10⁷ | 10⁷ | 10⁸ | 10⁸ |

| Immediately after being manufactured | | | | | | |
|---|---|---|---|---|---|---|
| general lactic bacteria | 2x | 2.6x | 2.6x | 9x | 9x | 2x |
| | 10⁷ | 10⁷ | 10⁷ | 10⁶ | 10⁷ | 10⁸ |
| bifidus bacteria | 3x | 4.4x | 4.4x | 1.1x | 1.1x | 3x |
| | 10⁷ | 10⁷ | 10⁷ | 10⁷ | 10⁸ | 10⁸ |

| In 6 months after being manufactured | | | | | | |
|---|---|---|---|---|---|---|
| general lactic bacteria | 2x | 2.6x | 2.6x | 9x | 9x | 2x |
| | 10⁷ | 10⁷ | 10⁷ | 10⁶ | 10⁷ | 10⁸ |
| bifidus bacteria | 3x | 4.4x | 4.4x | 1.1x | 1.1x | 3x |
| | 10⁷ | 10⁷ | 10⁷ | 10⁷ | 10⁸ | 10⁸ |

As shown from results of the above table 2, almost no change could be seen between the numbers of living bacteria actually added and those immediately after being manufactured in all covered confectionery in examples. Further, significant decrease in the number of living bacteria could not be identified in six months after being manufactured. Especially, there was no significant change in numbers of living bacteria when mixing, immediately after being manufactured and in six months after being manufactured in Example 6 in which a temperature for melting the oil composition material was 50°C (an upper limit).

### EXAMPLES 7 TO 13

The covered confectionery (B) as shown in Fig. 2 was manufactured by the above-mentioned method. That is, each composition containing lactic bacteria was compounded by employing raw material at the mixing ratio shown in the following tables 3 and 4 so as to form thereof into a specified shape as center material. Further, tempering type as cocoa butter substitute was employed in examples 7 and 8, while non-tempering type was employed in examples 9 to 13. In the meantime, general chocolate was prepared so as to cover the above center material, resulting in the covered confectionery as an objective. In addition, the composition of the above general chocolate is 42 parts cacao mass, 47 parts sugar, 11 parts cocoa butter, 0.4 part lecithin and 0.05 part vanillin.

### EXAMPLE 14

In the above example 1, raisin (a quarter cut) was added into the center material so as to produce the covered confectionery as an objective.

### EXAMPLES 15 TO 20

Chocolate confectionery made of composition of the present invention alone was made by the above-mentioned method. That is, raw materials at the mixing ratio as shown in tables 5 and 6 below were compounded and formed into a trigonal prism, resulting in chocolate confectionery as an objective. In addition, tempering type was employed as cocoa butter substitute in examples 15 to 17, while non-tempering type was employed in examples 18 to 20.

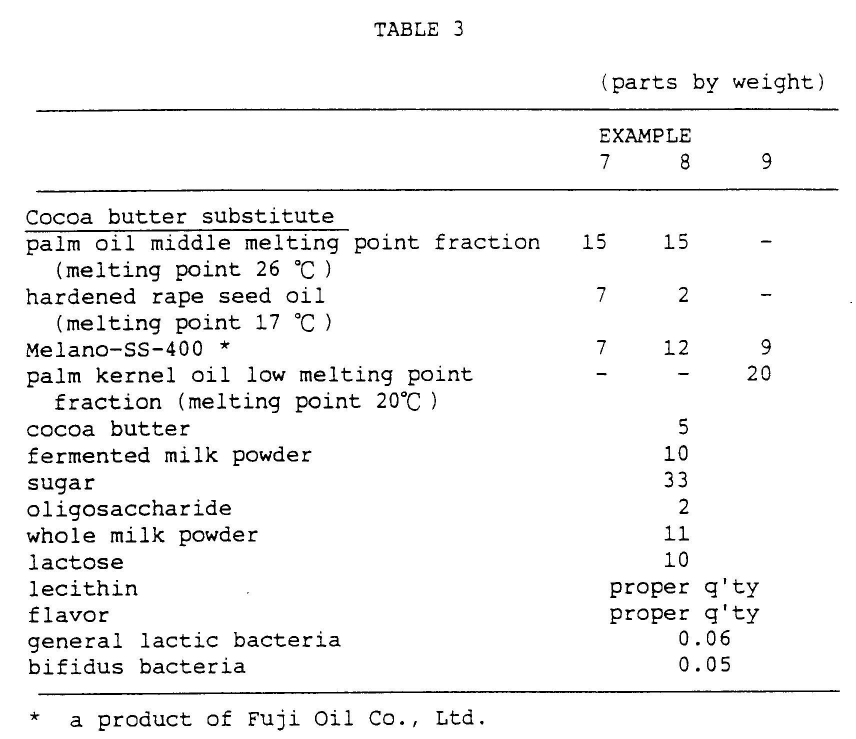

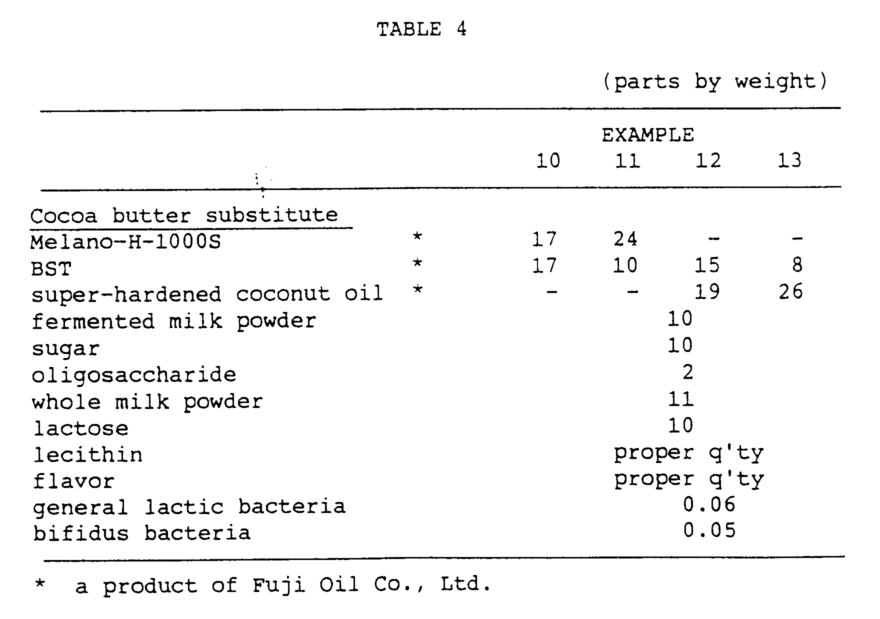

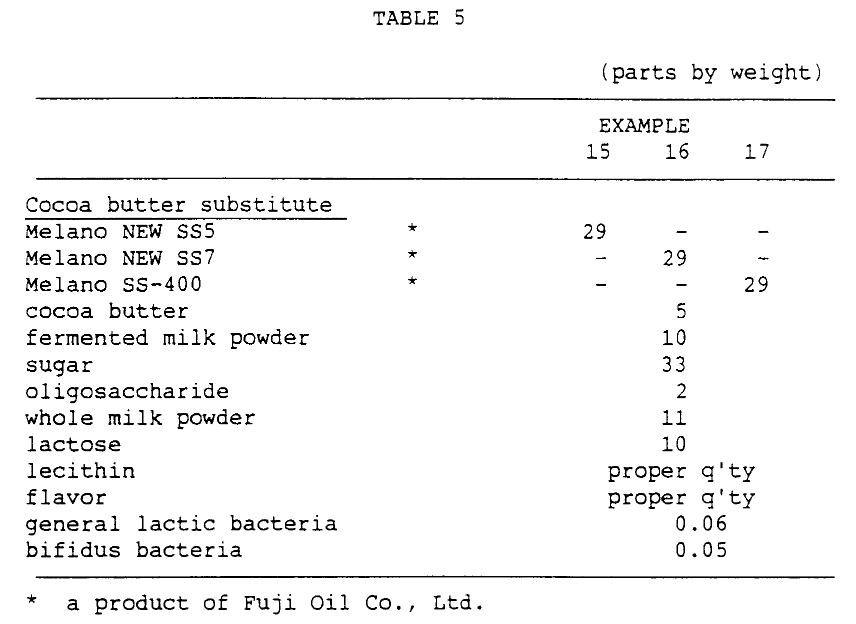

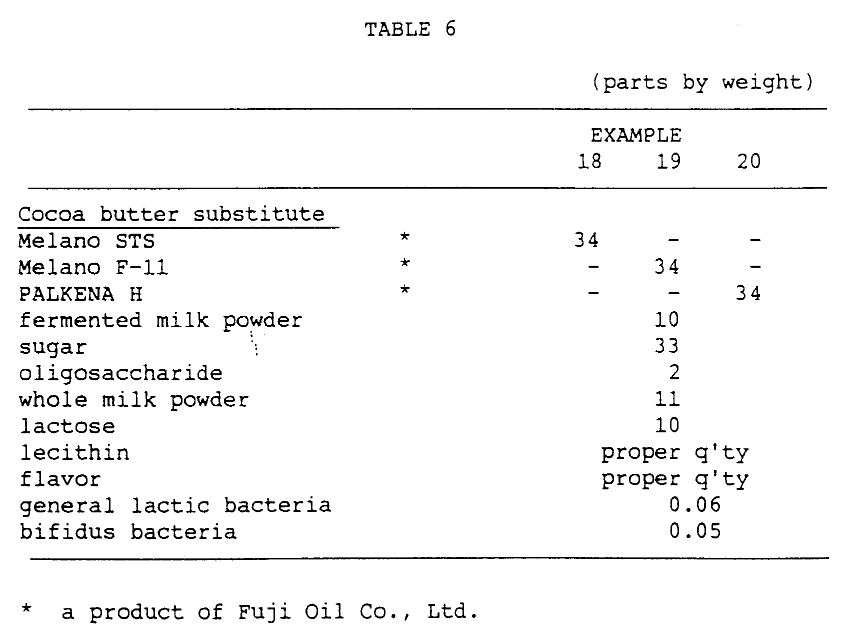

### EXAMPLE 21

In example 2, raisin (a quarter cut) was compounded into the composition of the invention, resulting in chocolate confectionery as an objective.

Thus obtained confectionery in examples 7 to 21 were subjected to an organoleptic test. As a result, the covered confectionery in examples 7 to 13 had unique favourable flavours by mixture of usual chocolate (covering material) and yoghurt type chocolate (center material) concomitantly. Besides, since raisins were compounded in addition to the above usual chocolate and yoghurt type chocolate in example 14, this resulted in further unique favourable flavour. Chocolate confectionery made only of the composition of examples 15 to 20 had favourable fresh sour flavour. In addition, chocolate confectionery in example 21 created favourable flavour by the combined effect of raisin and yoghurt type chocolate.

The survival test of lactic bacteria was conducted on the above examples 7 to 21 by the above method. No remarkable change was identified in the number of bacteria immediately after being manufactured and in six months after being manufactured.

## Claims

1. Composition containing fats and/or oils, fermented milk powder, saccharides and live lactic bacteria.

2. Composition according to claim 1, in which the lactic bacteria comprises bifidus bacteria.

3. Composition according to claim 1 or 2, containing oligosaccharide.

4. Composition according to any of claims 1 to 3, in which the said fats and/or oils are at least one selected from cocoa butter and cocoa butter substitute.

5. Composition according to any of claims 1 to 4, in which the mixing ratio (by dry weight) of lactic bacteria is within the range 0.01 to 1 weight % based on the total composition.

6. A method of forming a composition comprising: mixing fats and/or oils, fermented milk powder and saccharides; heating to 30°C to 50°C for melting; and adding live lactic bacteria.

7. A method according to claim 6, in which the lactic bacteria is in a dry state.

8. A method according to claim 6 or 7, in which the lactic bacteria comprises bifidus bacteria.

9. A method according to any of claims 6 to 8, in which the saccharides comprise oligosaccharide.

10. A method according to any of claims 6 to 9, in which the mixing ratio (by dry weight) of the lactic bacteria is within the range 0.01 to 1 weight % based on the total composition.

11. Confectionery in which a center material is coated with a composition according to any of claims 1 to 5.

12. Confectionery according to claim 11, in which the center material is raisin.

13. Confectionery in which a composition according to any of claims 1 to 5 is formed as a center material, which is coated with chocolate or a chocolate-like composition.
